# EUROPEAN PATENT SPECIFICATION

(11) **EP 1 795 753 B1**
(45) Date of publication and mention of the grant of the patent: **29.04.2015**
(21) Application number: 05720204.6
(22) Date of filing: 08.03.2005
(51) Int. Cl.: F04B 39/16, F04B 27/10, F25B 43/00, B01D 45/16, B04C 5/06, B04C 3/06, B04C 5/187, B04C 9/00, B04C 3/00

(54) **COMPRESSOR WITH FOREIGN MATTER REMOVER**
KOMPRESSOR MIT VORRICHTUNG ZUM ENTFERNEN VON FREMDSTOFFEN
COMPRESSEUR ET ÉLIMINATEUR DE CORPS ÉTRANGERS

(30) Priority: 30.07.2004 JP 2004022346
(43) Date of publication of application: 13.06.2007
(73) Proprietor: Valeo Japan Co., Ltd., Saitama, 360-0193 (JP)
(72) Inventor: FURUYA, Shunichi, VALEO THERMAL SYSTEMS JAPAN CORP, Osato-gun, Saitama 3600193 (JP); KANAI, Hiroshi, VALEO THERMAL SYSTEMS JAPAN CORP., Osato-gun, Saitama 3600193 (JP); DEGUCHI, Hironobu VALEO THERMAL SYSTEMS JAPAN CORP, Osato-gun, Saitama 3600193 (JP)
(74) Representative: Prinz & Partner mbB
(86) International application number: PCT/JP2005/003932
(87) International publication number: WO 2006/011263

(56) References cited:
- JP-A- 9 021 386
- JP-A- 9 021 386
- JP-A- 9 222 083
- JP-A- 2000 213 831
- JP-A- 2000 303 956
- JP-A- 2001 295 767
- JP-A- 2002 263 430
- JP-U- 3 114 585
- JP-U- 51 025 107
- JP-U- 55 163 489
- US-A- 5 865 607
- US-A1- 2002 131 876
- US-B1- 6 764 593

## Description

### Technical Field

The present invention relates to a compressor equipped with a foreign matter remover that removes foreign matter present in a refrigerant.

### Background Art

Contaminant particles such as iron, aluminum and SiC circulate together with the refrigerant and settle on the components of an air-conditioning unit. If these contaminant particles are allowed to enter the compressor, numerous problems will occur. For instance, if they enter a control valve that controls the internal pressure in the crankcase, the motion of the spool is slowed down and, in the worst case scenario, the spool motion becomes disabled altogether, which, in turn, disables capacity control.

For this reason, compressors are equipped with foreign matter removers that remove foreign matter present in their refrigerant circuits. Such foreign matter removers include the one disclosed in Patent Reference Literature 1. The foreign matter remover in this example removes foreign matter via a filter element. While the efficiency of the refrigerating cycle is compromised if the filter element becomes clogged up and the inflow resistance increases, this concern is addressed by forming a first path and a second path within the filter element so that foreign matter can be removed through the second path and the refrigerant flow can be sustained through the second path even when the first path becomes clogged.
Patent Reference Literature 1: Japanese Unexamined Patent Publication No. 2002-263430

A second compressor is shown in the US 2002/131 876 A1 which is considered to be the closest prior art.

### Disclosure of the Invention

### Problems to be Solved by the Invention

There are limits to the size of foreign matter that can be captured by the foreign matter remover disclosed in Patent Reference Literature 1, constituted with a filter, the mesh size of which is restricted to several tens of microns. In other words, the foreign matter remover in Patent Reference Literature 1 does not achieve complete removal of foreign matter.

Accordingly, an object of the present invention is to capture foreign matter regardless of its size while preventing a significant increase in the intake resistance due to the presence of foreign matter.

### Means for Solving the Problems

The compressor equipped with a foreign matter remover according to the present invention comprises the features of claim 1.

Foreign matter present in the intake passage enters the space via the inflow port and then become separated at the separation unit. The foreign matter having becomes separated then precipitates down and is captured by the capturing member. Since the foreign matter is captured without requiring any filtering, any size of foreign matter can be captured. Since the captured foreign matter is trapped inside the capturing member, it is not swept up in the refrigerant gas flow, and thus, the refrigerant, now free of foreign matter, flows out through the outflow port.

The outflow port through which the refrigerant flows out is disposed at a substantial center at the bottom of the space and is made to rise upright from the bottom, thereby facilitating the outflow of the refrigerant (claim 2). Alternatively, the outflow port may be suspended from above at a substantial center of the space so as to let the refrigerant flow out from an upper side (claim 3). Namely, by selectively adopting a specific structure for the outflow port, the refrigerant can be made to flow out through the lower side or the upper side as required.

The separation unit is constituted with a swirl-generating means for inducing a swirl that swirls the incoming refrigerant (claim 4). Since the specific gravity of foreign matter that would cause problems is normally at least approximately 1.5 times the specific gravity of the refrigerant, the foreign matter will be forced outward by centrifugal force in the swirl, and will precipitate down toward the capturing member disposed below to be captured therein. The means for generating the swirl may be achieved by connecting the inflow port to the space along a tangential direction (claim 5), by orienting the opening of the inflow portion so as to distend along a tangential direction relative to the space (claim 6), or by disposing a spiral guide portion within the space (claim 7).

The capturing member may be constituted of an unwoven cloth, a nonmetal mesh or a sintered material with numerous holes formed therein (claims 8, 9 and 10). The foreign matter having become separated is captured by the capturing member. The captured foreign matter is trapped inside the capturing member and thus, it is not swept upward in the refrigerant gas flow.

By projecting an upper end of the outflow port further upward beyond the upper surface of the capturing member (claim 11), reentry of the foreign matter that has become separated from the refrigerant flow and captured by the capturing member, is prevented with further effectiveness.

The separation unit that separates the foreign matter may be a colliding member that induces a collision of the incoming refrigerant to separate the foreign matter (claim 12). In this case, as the collision of the refrigerant occurs, the foreign matter becomes separated due to the difference between the specific gravity of the foreign matter and the specific gravity of the refrigerant and the separated foreign matter is then captured by the capturing member. The colliding member may be a separation plate provided as an independent member or it may be constituted with the capturing member itself.

### Effect of the Invention

As described above, the refrigerant containing foreign matter is guided into the space in a swirling flow and the foreign matter becomes separated from the refrigerant due to the difference in the specific gravity as centrifugal force is applied to the refrigerant. The foreign matter having become separated precipitates down and is captured by the capturing member. Since the capturing member is not a filtering member such as a mesh, foreign matter as small as several microns can be captured. The captured foreign matter is trapped inside the capturing member and thus, it is not swept upward in the flow of the gas having been taken in. The captured foreign matter does not clog up the capturing member and thus, no additional resistance is applied to the refrigerant flow." so as to read "As described above, the refrigerant containing foreign matter is guided into the space as its flow is altered and the foreign matter becomes separated from the refrigerant due to the difference in the specific gravity as centrifugal force is applied to the refrigerant. The foreign matter having become separated precipitates down and is captured by the capturing member. Since the capturing member is not a filtering member such as a mesh, foreign matter as small as several microns can be captured. The captured foreign matter is trapped inside the capturing member and thus, it is not swept upward in the flow of the gas having been taken in. The captured foreign matter does not clog up the capturing member and thus, no additional resistance is applied to the refrigerant flow.

### Brief Description of the Drawings

- (FIG. 1): A sectional view of a first embodiment of the present invention
- (FIG. 2): An enlarged sectional view of the foreign matter remover achieved in the first embodiment
- (FIG. 3): A lateral sectional view of the foreign matter remover
- (FIG. 4): Perspectives of a capturing member and a snap ring that may be used in the first embodiment of the present invention, respectively presented in (a) and (b)
- (FIG. 5): Perspectives of another capturing member and a punched metal plate that may be used in the first embodiment of the present invention, respectively presented in (a) and (b)
- (FIG. 6): A longitudinal sectional view of the foreign matter remover achieved in a second embodiment of the present invention
- (FIG. 7): A longitudinal sectional view of the foreign matter remover achieved in a third embodiment of the present invention
- (FIG. 8): A lateral sectional view of the foreign matter remover achieved in the third embodiment of the present invention
- (FIG. 9): Variations of the inflow port in the third embodiment presented in (a), (b) and (c)
- (FIG. 10): A sectional view of the foreign matter remover achieved in a fourth embodiment of the present invention
- (FIG. 11): A sectional view of the foreign matter remover achieved in a fifth embodiment of the present invention
- (FIG. 12): A sectional view of the foreign matter remover achieved in a sixth embodiment of the present invention
- (FIG. 13): A sectional view of the foreign matter remover achieved in a seventh embodiment of the present invention
- (FIG. 14): A sectional view of the foreign matter remover achieved in an eighth embodiment of the present invention

### Explanation of Reference Numerals

- 1: compressor
- 2: housing
- 3: front housing
- 4: rear housing
- 10: outlet chamber
- 11: intake chamber
- 14: control valve
- 17: valve plate
- 22: foreign matter remover
- 25: cylinder block
- 30: drive shaft
- 41: swashplate
- 44: piston
- 47: space
- 48: upper lid
- 51: inflow port
- 52: capturing member
- 57: outflow port
- 58: punched metal plate
- 60: spiral guide member
- 63: separation plate

### Best Mode for Carrying Out the Invention

The following is an explanation of the embodiments of the present invention, given in reference to the drawings.

### Embodiment 1

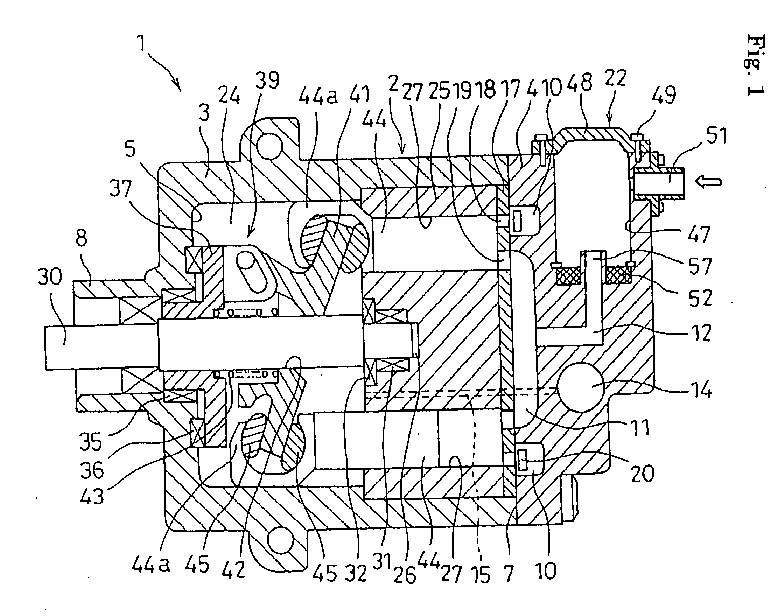

In reference to FIG. 1, a compressor 1 equipped with a foreign matter remover is first explained, and then the foreign matter remover 22 is described. The compressor 1 comprises a front housing 3 and a rear housing 4 closing off an open end of the front housing 3, with the front housing and the rear housing constituting a housing 2. A housing space 5 is defined within the compressor 1.

The front housing 3 is a cylindrical structure with one open end, which includes an open end 7 located on the right side and a boss portion 8 with a small diameter located on the left side thereof. At the rear housing 4, an annular outlet chamber 10 is formed at the inner side surface thereof so as to range from further outside along the radial direction, with an intake chamber 11 formed further inside relative to the outlet chamber. Reference numeral 12 indicates an intake passage communicating with the intake chamber 11, with the foreign matter remover 22 to be detailed later disposed on the passage 12.

Reference numeral 14 indicates a control valve that controls the pressure inside a crankcase 24 to be detailed later so as to adjust the tilting angle of a swashplate 41 and adjust the outlet quantity by releasing the pressure inside the crankcase 24 via a connecting passage 15 toward the low pressure side as a spool valve inside the control valve is moved in response to an output from an external control unit.

At a valve plate 17 held between the rear housing and a cylinder block 25 to be described below, a pair of holes, which includes an outlet port 18 and an inflow port 19, is formed in correspondence to each of cylinders 27 to be detailed below. At the valve plate 17, an intake valve (not shown) is disposed on the cylinder block side so as to face opposite the inflow port 19, an outlet valve (not shown) is disposed on the rear housing side so as to face opposite the outlet port 18 and a retainer 20 that regulates the extent to which the outlet valve is lifted is mounted.

The cylinder block 25 is housed inside the housing space 5 at the housing 2 and is fixed onto the rear housing 4 via a retaining bolt (not shown) so as to form the crankcase 24 on the left side within the housing space 5 at the housing 2. A bottomed holding port 26 for holding a drive shaft 30 to be explained later is formed so as to open on the crankcase side along the axial direction at the center of the cylinder block 25, with six cylinders 27 also extending along the axial direction formed around the holding port 26 over equal angular intervals.

The drive shaft 30 rotates as a rotational force from an external engine is transmitted thereto. The front end of the drive shaft 30 is inserted at the holding port 26 so as to be supported by the cylinder block 25 via a radial bearing 31 and a thrust bearing 32, whereas its bottom end is supported by the front housing 3 via a radial bearing 35 and a thrust bearing 36. A rotating base 37, fixed onto the drive shaft 30, is allowed to rotate together with the drive shaft 30. The rotational force of the rotating base 37 is transmitted to the swashplate 41 to be explained later via a link mechanism 39.

The swashplate 41 is mounted so as to rotate freely relative to the drive shaft 30. Namely, the drive shaft 30 is loosely fitted in a port 42 formed at the swashplate 41 and a force toward the cylinder block is applied from a spring 43 to the swashplate 41. Neck portions 44a of pistons inserted in the cylinders 27 are engaged via shoes 45 at the outer circumference of the swashplate 41. Thus, as the swashplate 41 rotates, the extent of piston stroke to be achieved by the pistons 44 is determined in proportion to the tilting angle of the swashplate.

More specifically, when the tilting angle of the swashplate 41 is smaller, the extent of piston stroke, too, is smaller, whereas as the tilting angle increases, the extent of piston stroke, too, increases. The tilting angle of the swashplate 41 is determined in correspondence to the pressure difference between the pressure inside the crankcase 24 and the refrigerant pressure (outlet pressure) inside the compression space, which is created by the pistons, and the outlet quantity is adjusted by controlling the pressure inside the crankcase 24.

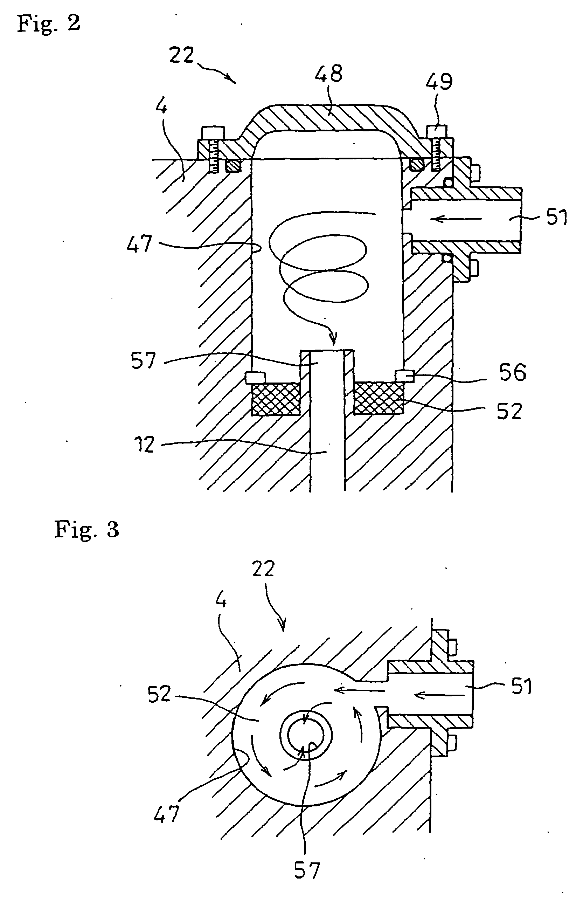

As shown in FIGS. 2 through 5 and 14, the foreign matter remover 22 in the variable-capacity compressor 1 adopting the structure described above is disposed on the intake passage 12 formed at the rear housing 4. The foreign matter remover 22 includes a cylindrical bottomed space 47 formed at the rear housing 4, the upper side of which is sealed with an upper lid 48 mounted via bolts 49.

In addition, an inflow port 51 constituting part of the intake passage 12 is connected to the space 47 on the upper side of the space 47 along a tangential direction. Thus, as shown in FIG. 3, the refrigerant having flowed in through the inflow port 51, advances further into the space 47 as indicated by the arrows and moves in a swirling flow within the space 47.

A capturing member 52 constituted with an unwoven cloth, a nonmetal mesh or a sintered material with numerous holes formed therein is housed and held via a snap ring 56 at the bottom of the space 47. Furthermore, an outflow port 57 constituting part of the intake passage 12 is formed so as to project out at the center of the bottom of the space 47, with the upper end of the outflow port 57 projecting further out beyond the upper end of the capturing member 52 by an optimal extent.

The refrigerant having flowed in through the inflow port 51 at the foreign matter remover 22 adopting the structure described above moves further into the space 47 in a swirling flow as indicated by the arrows. The foreign matter present in the refrigerant is mainly iron, aluminum, SiC and the like, and due to the difference between the specific gravity of the foreign matter and the specific gravity of the refrigerant, the foreign matter becomes separated and forced toward the outside to collide with the inner wall surface. After hitting the inner wall surface, the foreign matter precipitates down and is thus captured by the capturing member 52. The refrigerant, now free of foreign matter, is then guided into the intake chamber 11 through the outflow port 57 at the center.

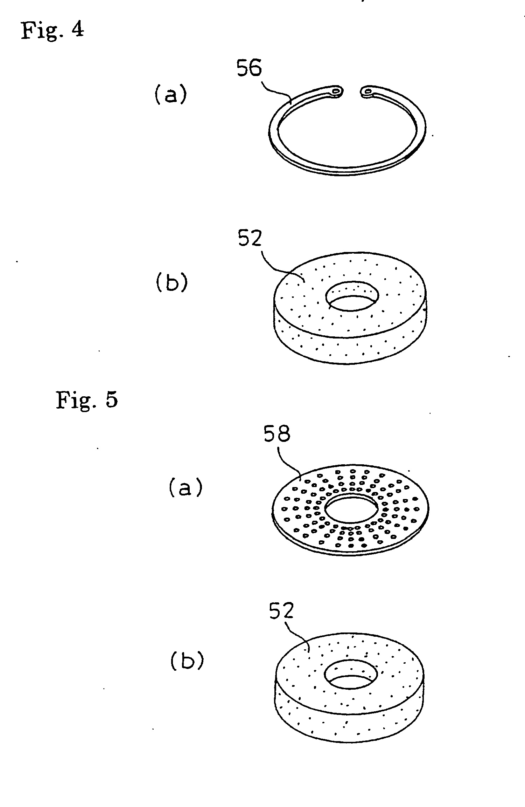

It is to be noted that since the upper end of the outflow port 57 projects further upward by an optimal extent beyond the upper surface of the capturing member 52, reentry of the captured foreign matter is prevented. It is also to be noted that the example presented in FIGS. 5(a) and 5(b) indicates that the capturing member 52 may be installed in the space 47 via a punched metal plate 58 with numerous small holes formed therein instead of the snap ring.

While the foreign matter remover 22, disposed at a position at which it does not intersect the refrigerant flow, never becomes clogged, the upper lid 48 can be opened by removing the bolts 49 to replace the capturing member 52 inside if a problem that necessitates such replacement ever occurs.

### Embodiment 2

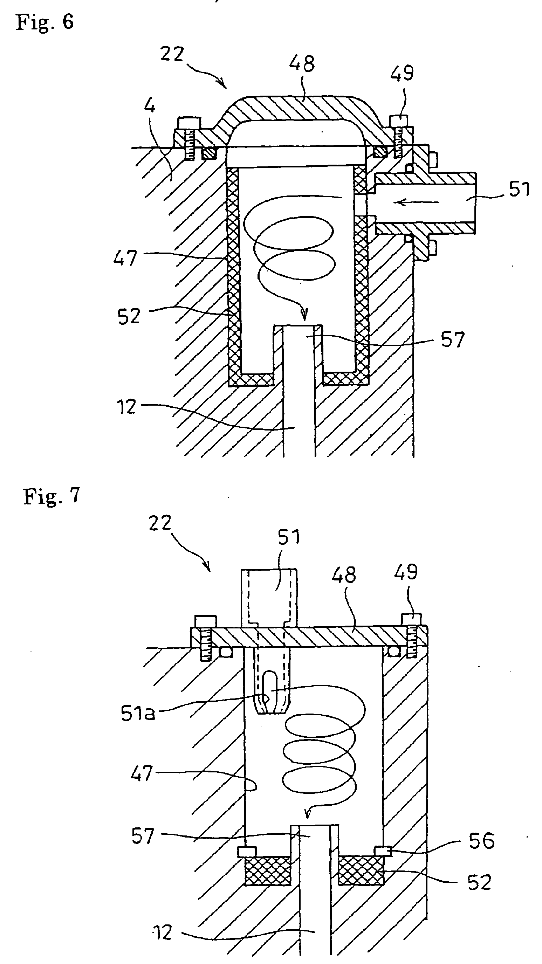

FIG. 6 presents a variation of the capturing member 52, which assumes a cylindrical shape. Such a capturing member 52 captures the separated foreign matter with an even higher capturing rate. Since other parts of the foreign matter remover are identical to those in the previous embodiment, the same reference numerals are assigned to the identical members to preclude the necessity for a repeated explanation thereof.

### Embodiment 3

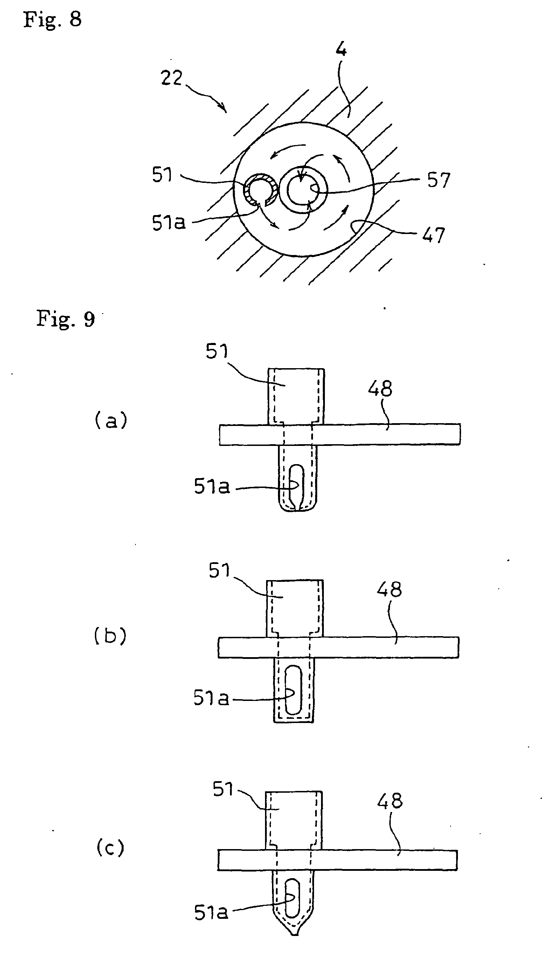

FIGS. 7 and 8 present a variation of the swirl-generating means for creating a swirling flow. Namely, the inflow port 51 is formed as a hole elongated along the vertical direction at the upper lid 48 so as to effectively create a swirling flow for the refrigerant supplied from the upper side in conjunction with a certain refrigerant piping layout.

An opening 51 a of the inflow port 51 is formed at a side and by allowing the refrigerant to flow into the space 47 along a tangential direction through the opening 51a, the swirling flow advancing along the direction indicated by the arrows in FIG. 8 is created. Namely, since the refrigerant is caused to move as a swirling flow, foreign matter can be separated from the refrigerant with centrifugal force, as in the previous embodiment. It is to be noted that the inflow ports 51 allow for variations such as those shown in FIGS. 9(a), 9(b) and 9(c).

### Embodiment 4

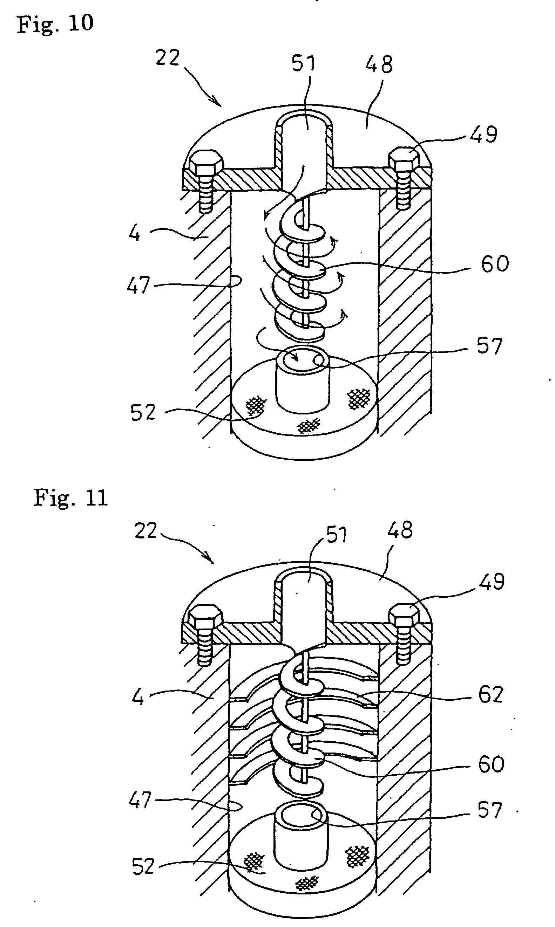

FIGS. 10 and 11 present further variations of the swirl-generating means for creating a swirling flow of the refrigerant. The swirl-generating means in FIG. 10 creates a swirling flow of the refrigerant supplied from the upper side, with a spiral guide member 60 disposed to extend along the vertical direction at the center of the space 47. The guide member guides the refrigerant having flowed in to move as indicated by the arrows in a swirling flow and as the swirling flow advances, foreign matter can be separated with centrifugal force.

### Embodiment 5

FIG. 11 shows a swirl-generating means constituted with a spiral guide member 60 disposed to extend along the vertical direction at the center of the space 47, as in the previous example, and another guide member 62 for creating a swirling flow of the refrigerant disposed at the inner wall surface of the space 47. The refrigerant having flowed in is guided by the central guide member 60 and the outer guide member 62 to move in a swirling flow and foreign matter can be effectively separated from the refrigerant as it advances in the swirling flow.

### Embodiment 6

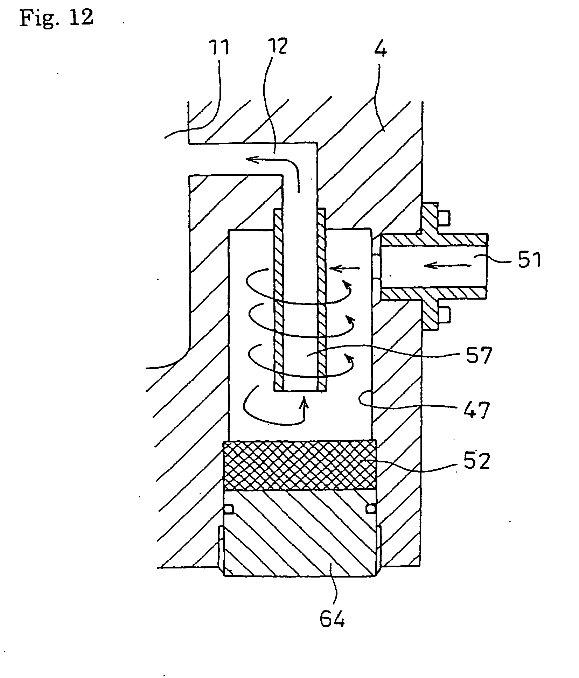

In the example presented in FIG. 12, the refrigerant is let out through the upper side of the space 47 through an outflow port 57 suspended from above at the center of the space and ranging over the rear housing 4. In this structure, the front end of the outflow port 57 reaches the lower side of the space 47. Thus, the refrigerant having flowed into the space 47 through the inflow port 51 moves in a swirling flow, as indicated by the arrows and while it advances in the swirling flow, foreign matter becomes separated from the refrigerant. The refrigerant having become free of foreign matter enters the outflow port 57 through its front end disposed near the bottom of the space, rises up through the outflow port and flows out through the upper side of the space 47. It is to be noted that the capturing member 52 is held with a retainer plug 64 and thus, the retainer plug 64 only needs to be disengaged whenever the capturing member 52 needs to be replaced.

### Embodiment 7

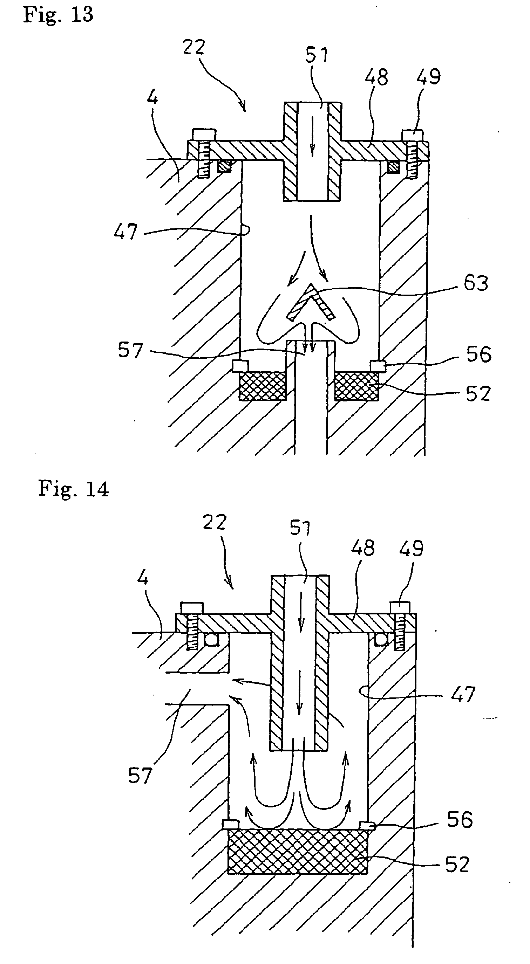

FIGS. 13 and 14 each present an example of a separation unit that separates foreign matter from the refrigerant by causing collision of the refrigerant. In the example presented in FIG. 13, the inflow port 51 is disposed at the upper lid 48, and the refrigerant is made to flow downward, as indicated by the arrows, through the inflow port 51. It then collides with an umbrella-shaped separation plate 63 and the impact of the collision forces foreign matter out of the refrigerant to precipitate downward and be captured by the capturing member 52. The refrigerant having become free of foreign matter then flows out through the outflow port 57.

### Embodiment 8

In the example presented in FIG. 14, the inflow port 51 is disposed at the upper lid 48 and the refrigerant is made to flow downward through the inflow port 51 as indicated by the arrows. The refrigerant then directly collides with the capturing member 52, foreign matter is thus captured by the capturing member 52 and the refrigerant makes a U-turn to flow out through the outflow port 57. It is to be noted that the same reference numerals are assigned to components in embodiment 3, 4, 5, 6, 7 and 8 that are identical to those in the first embodiment to preclude the necessity for a repeated explanation thereof.

## Claims

1. A compressor (10) equipped with a foreign matter remover (22) comprising:
a space that is formed on an intake passage of said compressor (10) and includes an inflow port (51) through which refrigerant flows in;
a separation unit adapted to separate foreign matter from the refrigerant which flows in the space from the inflow port;
a capturing member (52) that is disposed at least below said space and adapted to capture the foreign matter having become separated; and
an outflow port (57) disposed at said space through which the refrigerant flows out from said space,
**characterized in that** said capturing member (52) is provided at least at a position where the foreign matter separating from the refrigerant flow precipitates down and is trapped by said capturing member (62) and whereby said capturing member (52) prevents clogging and prevents additional flow resistance to the refrigerant flow.

2. A compressor equipped with a foreign matter remover (22) according to claim 1, **characterized in that** the outflow port (57) is disposed at a center of a bottom of said space so as to rise upright from the bottom, through which the refrigerant flows out.

3. A compressor equipped with a foreign matter remover (22) according to the claim 1 or 2, **characterized in that** the outflow port (57) is suspended from above at a substantial center of said space, which guides the refrigerant to flow out through an upper side of said space.

4. A compressor equipped with a foreign matter remover (22) according to any of claims 1 to 3, **characterized in:**
**that** said separation unit that separates the foreign matter is constituted with a swirl-generating means for inducing a swirling flow of the refrigerant having flowed in.

5. A compressor equipped with a foreign matter remover (22) according to claim 4,
**characterized in:**
**that** said swirl-generating means creates a swirling flow with an inflow port (51) connected to said space along a tangential direction.

6. A compressor equipped with a foreign matter remover (22) according to claim 4,**characterized in:**
**that** said swirl-generating means creates a swirling flow through an opening of an inflow portion oriented so as to let out the refrigerant into said space along a tangential direction.

7. A compressor equipped with a foreign matter remover (22) according to claim 4, **characterized in:**
**that** said swirl creating means creates a swirling flow with a spiral guide portion disposed within said space.

8. A compressor equipped with a foreign matter remover (22) according to any of claims 1 to 3, **characterized in:**
**that** said capturing member (52) is constituted of an unwoven cloth.

9. A compressor equipped with a foreign matter remover (22) according to any of claims 1 to 3, **characterized in:**
**that** said capturing member (52) is constituted of a nonmetal mesh.

10. A compressor equipped with a foreign matter remover (22) according to any of claims 1 to 3, **characterized in:**
**that** said capturing member (52) is constituted of a sintered material with numerous holes formed therein.

11. A compressor equipped with a foreign matter remover (22) according to claims 1 to 2, **characterized in:**
**that** an upper end of said outflow port (57) projects further up beyond the upper surface of said capturing member (52).

12. A compressor equipped with a foreign matter remover (22) according to any of claims 1 to 3, **characterized in:**
**that** said separation unit that separates foreign matter is a colliding member that separates the foreign matter by causing collision of the incoming refrigerant.

## Patentansprüche

1. Kompressor (10), der mit einer Fremdstoffentfernungseinrichtung (22) ausgestattet ist, die Folgendes umfasst:
einen Raum, der an einem Ansaugdurchgang des Kompressors (10) gebildet ist und eine Einströmöffnung (51) aufweist, durch die Kältemittel einströmt,
eine Abscheideeinheit, die zum Abscheiden von Fremdstoffen aus dem Kältemittel eingerichtet ist, das von der Einströmöffnung in den Raum strömt,
ein Einfangelement (52), das zumindest unterhalb des Raumes angeordnet ist und zum Einfangen der Fremdstoffe eingerichtet ist, die abgeschieden worden sind, und
eine Ausströmöffnung (57), die an dem Raum angeordnet ist und durch die das Kältemittel aus dem Raum ausströmt,
**dadurch gekennzeichnet, dass** das Einfangelement (52) zumindest an einer Position vorgesehen ist, an der die sich aus der Kältemittelströmung abscheidenden Fremdstoffe sich nach unten absetzen und von dem Einfangelement (52) aufgefangen werden, und wodurch das Einfangelement (52) ein Zusetzen verhindert und einen zusätzlichen Strömungswiderstand gegenüber der Kältemittelströmung verhindert.

2. Kompressor, der mit einer Fremdstoffentfernungseinrichtung (22) nach Anspruch 1 ausgestattet ist, **dadurch gekennzeichnet, dass** die Ausströmöffnung (57) so an einer Mitte eines Bodens des Raumes angeordnet ist, dass sie von dem Boden, durch den das Kältemittel ausströmt, aufrecht hochragt.

3. Kompressor, der mit einer Fremdstoffentfernungseinrichtung (22) nach Anspruch 1 oder 2 ausgestattet ist, **dadurch gekennzeichnet, dass** die Ausströmöffnung (57) an einer substanziellen Mitte des Raumes von oben herabhängt, was das Kältemittel so leitet, dass es durch eine Oberseite des Raumes ausströmt.

4. Kompressor, der mit einer Fremdstoffentfernungseinrichtung (22) nach einem der Ansprüche 1 bis 3 ausgestattet ist, **dadurch gekennzeichnet,**
**dass** die Abscheideeinheit, die die Fremdstoffe abscheidet, mit einer Wirbel erzeugenden Einrichtung gebildet ist, um eine Wirbelströmung des Kältemittels, das eingeströmt ist, zu bewirken.

5. Kompressor, der mit einer Fremdstoffentfernungseinrichtung (22) nach Anspruch 4 ausgestattet ist, **dadurch gekennzeichnet,**
**dass** die Wirbel erzeugende Einrichtung eine Wirbelströmung mit einer Einströmöffnung (51) schafft, die entlang einer Tangentialrichtung mit dem Raum verbunden ist.

6. Kompressor, der mit einer Fremdstoffentfernungseinrichtung (22) nach Anspruch 4 ausgestattet ist, **dadurch gekennzeichnet,**
**dass** die Wirbel erzeugende Einrichtung eine Wirbelströmung durch eine Öffnung eines Einströmabschnitts schafft, der so ausgerichtet ist, dass er das Kältemittel entlang einer Tangentialrichtung in den Raum auslässt.

7. Kompressor, der mit einer Fremdstoffentfernungseinrichtung (22) nach Anspruch 4 ausgestattet ist, **dadurch gekennzeichnet,**
**dass** die Wirbel schaffende Einrichtung eine Wirbelströmung mit einem spiralförmigen Führungsabschnitt schafft, der in dem Raum angeordnet ist.

8. Kompressor, der mit einer Fremdstoffentfernungseinrichtung (22) nach einem der Ansprüche 1 bis 3 ausgestattet ist, **dadurch gekennzeichnet,**
**dass** das Einfangelement (52) aus einem nicht gewebten Stoff gebildet ist.

9. Kompressor, der mit einer Fremdstoffentfernungseinrichtung (22) nach einem der Ansprüche 1 bis 3 ausgestattet ist, **dadurch gekennzeichnet,**
**dass** das Einfangelement (52) aus einem nichtmetallischen Geflecht gebildet ist.

10. Kompressor, der mit einer Fremdstoffentfernungseinrichtung (22) nach einem der Ansprüche 1 bis 3 ausgestattet ist, **dadurch gekennzeichnet,**
**dass** das Einfangelement (52) aus einem Sintermaterial mit zahlreichen darin ausgebildeten Löchern gebildet ist.

11. Kompressor, der mit einer Fremdstoffentfernungseinrichtung (22) nach den Ansprüchen 1 bis 2 ausgestattet ist, **dadurch gekennzeichnet,**
**dass** ein oberes Ende der Ausströmöffnung (57) weiter nach oben über die obere Fläche des Einfangelements (52) hinaus ragt.

12. Kompressor, der mit einer Fremdstoffentfernungseinrichtung (22) nach einem der Ansprüche 1 bis 3 ausgestattet ist, **dadurch gekennzeichnet,**
**dass** die Abscheideeinheit, die Fremdstoffe abscheidet, ein Aufprallelement ist, das die Fremdstoffe abscheidet, indem es einen Aufprall des eintretenden Kältemittels bewirkt.

## Revendications

1. Compresseur (10) équipé d'un moyen d'enlèvement (22) de corps étrangers, comprenant :
un espace qui est réalisé sur un passage d'aspiration du compresseur (10) et qui présente un orifice d'admission (51) à travers lequel un réfrigérant pénètre ;
une unité de séparation apte à séparer les corps étrangers du réfrigérant s'écoulant dans l'espace depuis l'orifice d'admission ;
un élément de capture (52) qui est agencé au moins au-dessous de l'espace et qui est apte à capturer les corps étrangers séparés ; et
un orifice d'évacuation (57) qui est agencé au niveau de l'espace et à travers lequel le réfrigérant s'écoule hors de l'espace,
**caractérisé en ce que** l'élément de capture (52) est prévu au moins dans une position dans laquelle les corps étrangers se séparant du courant de réfrigérant se précipitent vers le bas et sont recueillis par l'élément de capture (52), et grâce à quoi l'élément de capture (52) empêche un colmatage et empêche une résistance hydraulique additionnelle au courant de réfrigérant.

2. Compresseur équipé d'un moyen d'enlèvement (22) de corps étrangers selon la revendication 1, **caractérisé en ce que** l'orifice d'évacuation (57) est agencé dans un centre d'un fond de l'espace de façon à s'élever de manière droite du fond à travers lequel le réfrigérant est évacué.

3. Compresseur équipé d'un moyen d'enlèvement (22) de corps étrangers selon la revendication 1 ou 2, **caractérisé en ce que** l'orifice d'évacuation (57) est suspendu depuis le haut dans un centre substantiel de l'espace, ce qui guide le réfrigérant de manière à ce qu'il s'échappe à travers une face supérieure de l'espace.

4. Compresseur équipé d'un moyen d'enlèvement (22) de corps étrangers selon l'une des revendications 1 à 3, **caractérisé en ce que**
l'unité de séparation séparant les corps étrangers est réalisée avec un moyen de génération de tourbillonnement pour provoquer un courant tourbillonnaire du réfrigérant qui est entré.

5. Compresseur équipé d'un moyen d'enlèvement (22) de corps étrangers selon la revendication 4, **caractérisé en ce que**
le moyen de génération de tourbillonnement crée un courant tourbillonnaire avec un orifice d'admission (51) qui est relié à l'espace selon un sens tangentiel.

6. Compresseur équipé d'un moyen d'enlèvement (22) de corps étrangers selon la revendication 4, **caractérisé en ce que**
le moyen de génération de tourbillonnement crée un courant tourbillonnaire à travers une ouverture d'un tronçon d'admission orienté de manière à laisser s'écouler le réfrigérant dans l'espace selon un sens tangentiel.

7. Compresseur équipé d'un moyen d'enlèvement (22) de corps étrangers selon la revendication 4, **caractérisé en ce que**
le moyen de création de tourbillonnement crée un courant tourbillonnaire avec un tronçon de guidage en spirale agencé à l'intérieur de l'espace.

8. Compresseur équipé d'un moyen d'enlèvement (22) de corps étrangers selon l'une des revendications 1 à 3, **caractérisé en ce que**
l'élément de capture (52) est composé d'une étoffe non tissée.

9. Compresseur équipé d'un moyen d'enlèvement (22) de corps étrangers selon l'une des revendications 1 à 3, **caractérisé en ce que**
l'élément de capture (52) est composé d'un treillis non métallique.

10. Compresseur équipé d'un moyen d'enlèvement (22) de corps étrangers selon l'une des revendications 1 à 3, **caractérisé en ce que**
l'élément de capture (52) est composé d'une matière frittée avec de nombreux trous réalisés dans celle-ci.

11. Compresseur équipé d'un moyen d'enlèvement (22) de corps étrangers selon les revendications 1 à 2, **caractérisé en ce que**
une extrémité supérieure de l'orifice d'évacuation (57) fait saillie plus loin vers le haut au-delà de la surface supérieure de l'élément de capture (52).

12. Compresseur équipé d'un moyen d'enlèvement (22) de corps étrangers selon l'une des revendications 1 à 3, **caractérisé en ce que**
l'unité de séparation séparant les corps étrangers est un élément d'impact qui sépare les corps étrangers en provoquant un impact du réfrigérant entrant.
